# EUROPEAN PATENT SPECIFICATION

(11) **EP 0 666 977 B1**
(45) Date of publication and mention of the grant of the patent: **13.05.1998**
(21) Application number: 93910071.5
(22) Date of filing: 03.06.1993
(51) Int. Cl.: G01M 3/20

(54) **OXYGEN-SENSITIVE COLOUR INDICATOR FOR DETECTING LEAKS IN GAS-PROTECTED FOOD PACKAGES**
SAUERSTOFFEMPFINDLICH FARBINDIKATOR ZUR LECKANZEIGE IN GASGESCHÜTZTEN NAHRUNGSPACKUNGEN
INDICATEUR COLORE SENSIBLE A OXYGENE DE FUITES DANS UNE ENBALLAGE ALIMENTAIRE REMPLIE DE GAZ PROTECTEUR

(30) Priority: 03.06.1992 FI 922570
(43) Date of publication of application: 16.08.1995
(73) Proprietor: VALTION TEKNILLINEN TUTKIMUSKESKUS, 02150 Espoo 15 (FI)
(72) Inventor: MATTILA-SANDHOLM, Tiina, FIN-02150 Espoo (FI); AHVENAINEN, Raija, FIN-02150 Espoo (FI); HURME, Eero, FIN-02150 Espoo (FI); JÄRVI-KÄÄRIÄINEN, Irma Terhen, FIN-02150 Espoo (FI)
(74) Representative: Papula, Antti
(86) International application number: FI9300242
(87) International publication number: WO9324820

(56) References cited:
- US-A- 3 795 147
- US-A- 4 187 798
- US-A- 4 772 707
- PATENT ABSTRACTS OF JAPAN, Vol. 10, No. 350, C-387; & JP,A,61 152 299 (NIPPON SODA CO LTD), 10 July 1986 (10.07.86)
- PATENT ABSTRACTS OF JAPAN, Vol. 4, No. 77, C-13; & JP,A,55 041 875 (MITSUBISHI GAS KAGAKU K.K.), 24 March 1980 (24.03.80)
- PATENT ABSTRACTS OF JAPAN, Vol. 12, No. 138, P-695; & JP,A,62 259 059 (MITSUBISHI GAS CHEM CO INC), 11 November 1987 (11.11.87)
- PATENT ABSTRACTS OF JAPAN, Vol. 10, No. 127, P-455; & JP,A,60 252 235 (DAINIPPON INSATSU K.K.), 12 December 1985 (12.12.85)

## Description

The present invention concerns a leakage indicator for a package.

The food industry is increasingly adopting protective gases in packaging food, in the first place meat and fast-food products. The protective gas guards the foodstuffs against deterioration. Non-leaking quality of the package is one of the essential properties of gas packages. If the gas package develops a leak, the gas will escape from the package and oxygen, which is harmful to the packed goods, gains access, whereby the added keeping quality afforded by the gas is lost. However, in the case of the majority of products the occurrence of leakage can only be established once the package has left the food processing plant, when the food inside the package has been spoilt (e.g. mould growth). This means that the consumer may buy a package containing a product which is on the verge of non-acceptability even though there may still be an ample margin of shelf time.

Experience gained in the food industry teaches that leaking of gas packages is often caused by excessive packaging speeds (by sealing failures) or by mechanical damage incurred by the package during handling and transports. Such cases of leakage are hard to detect, and they are frequently only revealed by spoiling of the contents.

In prior art two reagents are known: Ageless Eye by Mitsubishi Gas Chemical Co Inc., and Reagent V by Nippon Kayaku Inc. However, these reagents react to oxygen with undue sensitivity, e.g. to the residual oxygen entrapped in the packaging process. Furthermore, these indicators are not functional in the presence of carbon dioxide, which after all is one of the most important protective gases used in the food industry.

Patent Abstracts of Japan, vol.4, no.77, C-13; & JP-A-55 41875 discloses an oxygen indicator for gas protected packages which uses a reducing agent as oxygen sensitive colour indicator together with an oxygen absorber. Indicator and absorber are contained within an oxygen permeable container which is introduced into the food package.

Patent Abstracts of Japan, vol.12, no.138, P-695; & JP-A-62 259059 and further Patent Abstract of Japan, vol.10, no.350, C-387 & JP-A-61152299 each disclose oxygen indicators comprising an oxygen sensitive dye (e.g. methylene blue) and a reducing agent (such as a saccharide).

It is thus clear that observation of leakage in food packages poses a problem which has not been solved heretofore.

The object of the present invention is to eliminate the drawbacks mentioned. Specifically, the object of the invention is to disclose a novel leakage indicator which is fit to be used in conjunction with packages, particulary gas-protected packages, and specifically food packages. Furthermore, it is an object of the invention to disclose a leakage indicator which does not react to residual oxygen which may be entrapped in the package but which will react to oxygen continuously entering the package e.g. as a result of breakage. The object of the invention is further to disclose a leakage indicator which is appropriate to be used in connection with packages using carbon dioxide for protective gas.

These objects are fulfilled by the use of a leakage and deterioration indicator as defined in claim 1.

The invention is based on the inventive idea worked out in an investigation that was made, that the leakage indicator comprises in addition to a colourant reacting by change of colour under influence of oxygen, a reducing agent to reduce said colourant and to keep it in reduced state at the moment of packaging, and a particular oxygen absorbent for eliminating the residual oxygen entrapped in the package and for binding it in such manner that said residual oxygen will not react with the colourant. Then, owing to said reducing agent and said oxygen absorbent, the leakage indicator will not react with the residual oxygen entrapped in the package but will react in the event of leakage of the package.

Further, according to an advantageous embodiment of the invention, the leakage indicator is packaged in a double, oxygen-permeable package, e.g. in a double package made of packaging material, such as plastic or paper-based material, oxygen permeability on the order of 1000 to 10000 ml/m² day·atm, such as a double plastic package, e.g. in double polyethylene film wrapping. The thickness of either film is suitably on the order of about 30 to 70 µm, advantageously about 50 µm. Then, owing to the double packaging material, the oxygen-free interspace between the material courses will at the moment of packaging serve as buffer against atmospheric oxygen. The leakage indicator package, oxygen permeability of the packaging material 1000 to 10000 ml/m² day·atm, e.g. thickness of polyethylene films on the order of 30 to 70 µm, is oxygen-permeable enough to indicate any increase in oxygen content caused by leakage.

A leakage indicator according to the invention is advantageously packed e.g. inside a transparent food package. Then, owing to the invention, the leakage indicator will by colour change sensitively indicate any breakage of the food package, whereas it will not react to the residual oxygen entrapped in the package. The leakage indicator reveals e.g. in a retail store to the sales personnel, or in the last instance to the customer, any leakage and spoiling of the foodstuffs that may have taken place. The leakage indicator may equally be formed so that it reacts to metabolic products generated in bacterial proliferation and/or to oxygen entering the package through the leak, and leaking of the package or the microbiological quality of the food can be observed with ease by the colour of the indicator. The leakage indicator also indirectly indicates spoiling. Leakage is always followed by faster than normal spoiling of the product, and thus the indicator's change of colour indicates, for instance, spoiling of the foodstuff.

In the leakage indicator of the invention, the colourant is a Redox-type reducible/oxidizable colourant. Any colourant which is oxidized and changes colour under effect of atmospheric oxygen and which does not react with the protective gas, including carbon dioxide and e.g. nitrogen, used in a gas-protected package can be contemplated. The group of such Redox-type colourants includes methylene blue, gallocyanin, methylene red, etc.

The reducing agent used in the leakage indicator of the invention is meant to reduce the colourant and to keep it in reduced state at the moment of packaging. Any organic or inorganic reducing agent can be used for reducing agent which does not inhibit oxidation of the colourant by effect of atmospheric oxygen. Usable reducing agents are, for instance, reducing sugars, such as glucose.

The purpose with the oxygen absorbent used in the leakage indicator of the invention is to eliminate the residual oxygen entrapped in the food package in connection with the packaging operation so that the residual oxygen will not react with the colourant. The content of residual oxygen is of the order of 0.1 to 0.5 and up to 3%. Usable absorbents are, for instance, sulphates, hydrogen sulphites, thiosulphates, dithionites, hydroquinone, resorcinol, pyrogallol, gallic acid, rongalite, sodium formaldehyde sulphoxylate, ascorbic and isoascorbic acid and their salts, sorbose, glucose, lignin, dibutyldihydroxytoluene, butylhydroxyanisol, and iron salts and metal powders such as iron powder; carbon dioxide-producing oxygen absorbents and carbon dioxide-absorbing oxygen absorbents may also be used; most advantageous are ascorbic acid and/or salts thereof, isoascorbic acid and/or salts thereof, unsaturated fatty acid components or oxygen absorbents containing iron powder or strongly reductive enzymes, such as glucose oxidase, etc. In general, the oxygen absorbents may be any suitable compound, inorganic or organic.

The leakage indicator may in addition comprise a basic component e.g. NaOH, Na₂CO₃, NaHCO₃, etc. The leakage indicator may further include liquids, e.g. water. Furthermore the leakage indicator may include fillers, such as kaoline, silicon oxide, etc. The purpose with liquid is to make the indicator's structure more homogeneous and, on the other hand, to influence its rate of reaction. The basic components also affect the rate of reaction; the aim is to prevent excessively fast colour reactions, i.e., too rapid oxidation of the colourant.

The invention is described in detail in the following with the aid of embodiment examples, referring to the attached drawings, wherein
Fig. 1 illustrates the effect of oxygen absorbent use on the colour indicator's colour changes, and
Fig. 2 presents the colour changes of the colour indicator when a foodstuff is becoming spoiled.

### Example 1.

In this study, foodstuffs (ground meat steaks) were packaged in a polyethylene film bag impermeable to oxygen. The studies revealed that the excessively rapid oxidation of the colourants caused problems, i.e., the colourant placed e.g. in a package made of plastic film became oxidized already while it was being handled and inserted in the food package. This problem was eliminated by enclosing the colourant in a double, oxygen-permeable plastic film, preferably in a double package made of polyethylene film. The oxygen permeability of the packaging material is suitably 1000 to 10000 ml/m² day·atm, film thickness about 30 to 70 µm, advantageously about 50 µm. The oxygen-free gas space defined between the films will then at the moment of packaging act as buffer against atmospheric oxygen at the packaging stage. The polyethylene film is oxygen-permeable enough for indicating the increase in oxygen concentration caused by a leak in a leaking package. The leakage indicator which was used contained, in parts by weight:

| | |
|---|---|
| Methylene blue | 0.002375 |
| Gallocyanin | 0,000125 |
| Glucose | 0,8 |
| Water | 0.6 |
| NaHCO₃ | 10.0 |
| Oxygen absorbent | 1.0 to 2.0. |

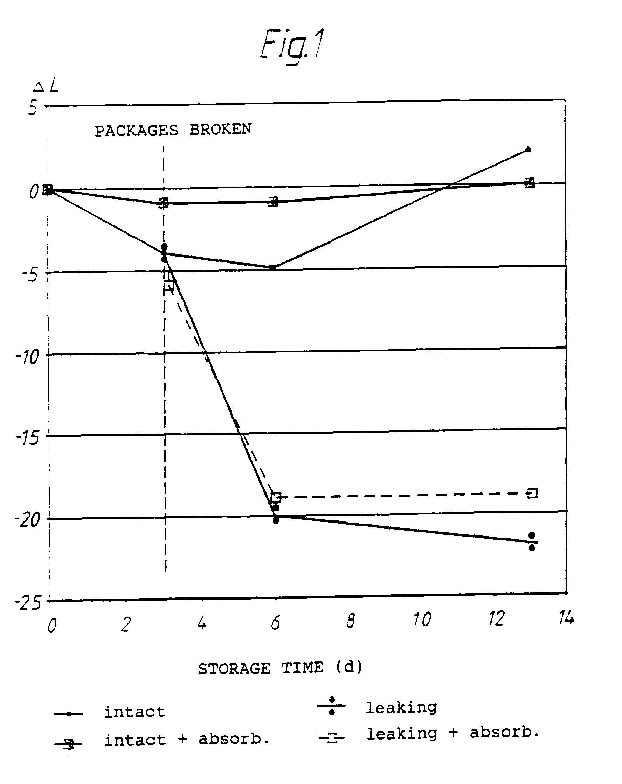

Packaging was carried out under protective gas so that the gas mixture contained about 20% CO₂ and about 80% N₂, oxygen less than 1%. There were altogether four groups of packages. A leakage indicator was inserted in the packages of two groups, placed in a double polyethylene package, film thickness 50 µm. The leakage indicators in two groups contained an oxygen absorbent, while those of the other two groups had no oxygen absorbent. Storage temperature was below 5°C. After three days' storage, perforations of 100 µm were made in the bags of two groups so that the bags began to leak. The changes of colour of the leakage indicators, i.e., of the colour indicator, were measured. The results are presented in Fig. 1.

As the results reveal, the oxygen absorbent is adequate to eliminate the residual oxygen present in the package, but not the oxygen introduced by leakage in the package. It should be noted that the quantity of oxygen absorbent in the indicator depends on the size of the package's gas volume. As shown by the results, the colour indicator kept clearly lighter in colour during 10-day storage in the intact packages containing absorbent than the colour packaged without absorbent (the colour darkens with diminishing and grows lighter with increasing L value). When a hole was made in the package, the colour changed quickly, indicating breakage of the package.

### Example 2.

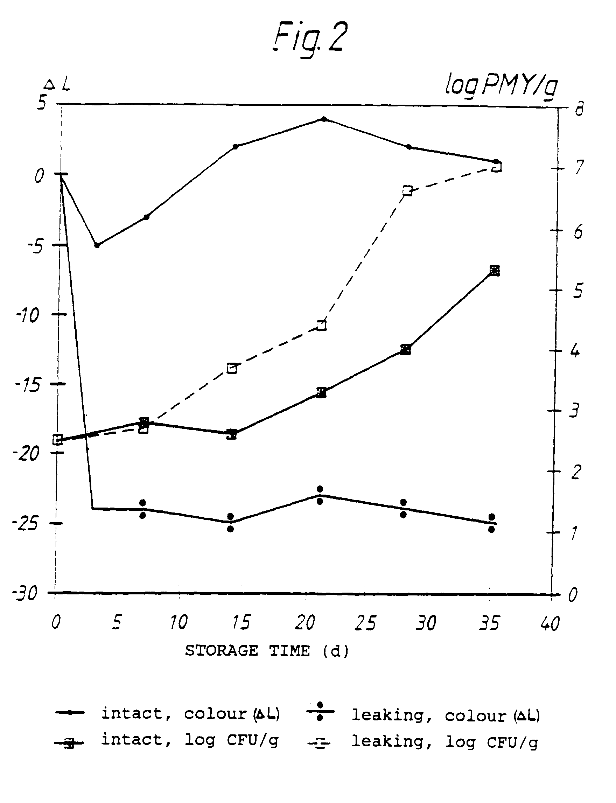

In this study, foodstuffs were packaged similarly as in Example 1. The microbe content (log CFU/g) was determined from the foodstuffs; the change of colour in the packages as a function of storage time was measured as in Example 1. Part of the packages were injured at the moment of packaging (a 1-mm hole), the other part was kept intact. The changes of colour are shown in Fig. 2 in terms of change of the L value, like in Example 1.

According to the results, the colour indicator does not react to spoiling of the foodstuffs, that is, the diagrams indicate hardly any correlation between the colour changes of the indicator and microbe contents of the foodstuffs. On the other hand, spoiling of the foodstuffs did not interfere with the action of the colour indicator serving as leakage indicator either.

The embodiment examples are meant to illustrate the invention, without restricting it in any way whatsoever. The scope of protection is defined by the appended claims.

## Claims

1. The use of a leakage and deterioration indicator in a protective gas food package containing carbon dioxide as protective gas and about 0.1 - 3 % residual oxygen, wherein the indicator comprises an oxygen absorbent, a reducing agent and a colourant, which comprises a redox-type reducible/oxidizable compound, which is in reduced state at the moment of packaging food stuffs and which changes colour under influence of oxygen entering the protective gas package through leakage, the reducing agent for reducing the colourant and keeping it in a reduced state at the moment of packaging food stuffs, the oxygen absorbent for eliminating by binding of residual oxygen from the protective gas package.

2. The use according to claim 1 wherein the leakage indicator is packed in a double-walled package inside the protective gas package.

3. The use according to claim 2 wherein the double-walled package consists of double, oxygen-permeable packaging material.

4. The use according to claim 3 wherein the oxygen permeability of the packaging material of said package is 1000 to 10000 ml/m² day atm.

5. The use according to any one of claims 1-4, wherein the colourant is methylene blue, gallocyanin and/or methylene red.

6. The use according to any one of claims 1-5, wherein the reducing agent is a carbohydrate, advantageously a reductive sugar, such as glucose.

7. The use according to any one of claims 1-6, wherein the oxygen absorbent is a suitable compound, such as sulphites, hydrogen sulphites, thiosulphates, dithionites, hydroquinone, cathecol, resorcinol, pyrogallol, gallic acid, rongalite, sodium formaldehyde sulphoxylate, ascorbic and isoascorbic acid and salts thereof, sorbose, glucose, lignin, dibutylhydroxytolyene, butylhydroxyanisol, and iron salts and metal powders such as iron powder; carbon dioxide-forming oxygen absorbents, carbon dioxide-absorbing oxygen absorbents, ascorbic acid and/or salts thereof, isoascorbic acid and/or salts thereof, unsaturated fatty acid components, oxygen absorbents containing iron powder, strongly reductive enzymes, such as glucose oxidase.

8. The use according to any one of claims 1-7, **characterized** in that the indicator contains buffer and filler, such as e.g. sodium hydroxide, sodium carbonate, sodium hydrogen carbonate, kaolin, silicon oxide, aluminium oxide, talc, aluminium hydroxide, silicagel, infusorial earth.

## Patentansprüche

1. Verwendung eines Leck- und Verderb-Indikators in einer Schutzgas-Lebensmittelverpackung, welche Kohlendioxid als Schutzgas und ungefähr 0,1 bis 3% Rest-Sauerstoff enthält, worin der Indikator ein Sauerstoffabsorptionsmittel, ein Reduktionsmittel und ein Färbemittel umfaßt, welches eine reduzierbare/oxidierbare Redox-Verbindung umfaßt, welche zum Zeitpunkt der Verpackung der Lebensmittel in reduziertem Zustand vorliegt und unter dem Einfluß von Sauerstoff, der durch ein Leck in die Schutzgasverpackung gelangt, ihre Farbe ändert, wobei das Reduktionsmittel dazu dient, das Färbemittel zu reduzieren und zum Zeitpunkt der Verpackung der Lebensmittel in einem reduzierten Zustand zu halten, und das Sauerstoffabsorptionsmittel dazu dient, durch Bindung des Rest-Sauerstoffs diesen aus der Schutzgasverpackung zu entfernen.

2. Verwendung nach Anspruch 1, worin der Leck-Indikator in einer doppelwandigen Verpackung im Inneren der Schutzgasverpackung verpackt ist.

3. Verwendung nach Anspruch 2, worin die doppelwandige Verpackung aus doppeltem sauerstoffdurchlässigen Verpackungsmaterial besteht.

4. Verwendung nach Anspruch 3, worin die Sauerstoffdurchlässigkeit des Verpakkungsmaterials der Packung 1000 bis 10000 ml/m² · Tag · Atm beträgt.

5. Verwendung nach einem der Ansprüche 14, worin das Färbemittel Methylenblau, Gallocyanin und/oder Methylenrot ist.

6. Verwendung nach einem der Ansprüche 1-5, worin das Reduktionsmittel ein Kohlenhydrat, vorteilhafterweise ein reduzierender Zucker, wie etwa Glucose ist.

7. Verwendung nach einem der Ansprüche 1-6, worin das Sauerstoffabsorptionsmittel eine geeignete Verbindung ist, wie etwa Sulfite, Hydrogensulfite, Thiosulfate, Dithionite, Hydrochinon, Catechin, Resorcin, Pyrogallol, Gallussäure, Rongalit, Natrium-Formaldehyd-Sulfoxylat, Ascorbin- und Isoascorbinsäure und Salze davon, Sorbose, Glucose, Lignin, Dibutylhydroxytoluol, Butylhydroxyanisol, und Eisensalze und Metallpulver wie etwa Eisenpulver; Kohlendioxid bildende Sauerstoffabsorptionsmittel, kohlendioxidabsorbierende Sauerstoffabsorptionsmittel, Ascorbinsäure und/oder Salze davon, Isoascorbinsäure und/oder Salze davon, ungesättigte Fettsäurebestandteile, Sauerstoffabsorptionsmittel, welche Eisenpulver enthalten, stark reduzierende Enzyme, wie etwa Glucoseoxidase.

8. Verwendung nach einem der Ansprüche 1-7, **dadurch gekennzeichnet**, daß der Indikator einen Puffer und einen Füllstoff, wie z.B. Natriumhydroxid, Natriumcarbonat, Natriumhydrogencarbonat, Kaolin, Siliciumoxid, Aluminiumoxid, Talk, Aluminiumhydroxid, Silicagel, Infusorienerde, enthält.

## Revendications

1. Utilisation d'un indicateur de fuites et de détérioration dans un emballage alimentaire rempli de gaz protecteur contenant du dioxyde de carbone en tant que gaz protecteur et environ 0,1 à 3% d'oxygène résiduel, dans lequel l'indicateur comprend un absorbant d'oxygène, un agent réducteur, et un colorant qui comprend un composé réductible/oxydable de type redox, qui se trouve à l'état réduit au moment du conditionnement des denrées alimentaires et qui change de couleur sous l'influence de l'oxygène pénétrant dans l'emballage à gaz protecteur par suite de fuites, l'agent réducteur étant destiné à réduire le colorant et à le maintenir à l'état réduit au moment du conditionnement des denrées alimentaires, l'absorbant d'oxygène étant destiné à éliminer de l'emballage rempli de gaz protecteur l'oxygène résiduel par liaison.

2. Utilisation selon la revendication 1, dans laquelle l'indicateur de fuites est contenu dans un emballage à double paroi à l'intérieur de l'emballage rempli de gaz protecteur.

3. Utilisation selon la revendication 2, dans laquelle l'emballage à double paroi consiste en un matériau d'emballage double, perméable à l'oxygène.

4. Utilisation selon la revendication 3, dans laquelle la perméabilité à l'oxygène du matériau d'emballage dudit emballage est de 1.000 à 10.000 ml/m² jour atm.

5. Utilisation selon l'une quelconque des revendications 1 à 4, dans laquelle le colorant est le bleu de méthylène, la gallocyanine et/ou le rouge de méthylène.

6. Utilisation selon l'une quelconque des revendications 1 à 5, dans laquelle l'agent réducteur est un hydrate de carbone, de manière avantageuse un sucre réducteur tel que le glucose.

7. Utilisation selon l'une quelconque des revendications 1 à 6, dans laquelle l'absorbant d'oxygène est un composé approprié tel que un sulfite, un sulfite acide, un thiosulfate, un dithionite, l'hydroquinone, le cathécol, le résorcinol, le pyrogallol, l'acide gallique, la rongalite, le formaldéhyde sulfoxylate de sodium, l'acide ascorbique et iso-ascorbique et leurs sels, le sorbose, le glucose, la lignine, le dibutylhydroxytoluène, le butylhydroxyanisole, ou un sel de fer ou une poudre métallique telle que la poudre de fer; un absorbant d'oxygène produisant du dioxyde de carbone, un absorbant d'oxygène absorbant le dioxyde de carbone, l'acide ascorbique et/ou ses sels, l'acide iso-ascorbique et/ou ses sels, un acide gras insaturé, un absorbant d'oxygène contenant de la poudre de fer, une enzyme fortement réductrice, telles que la glucose oxydase.

8. Utilisation selon l'une quelconque des revendications 1 à 7, caractérisée en ce que l'indicateur contient un tampon et une charge, comme, par exemple, l'hydroxyde de sodium, le carbonate de sodium, le carbonate acide de sodium, le kaolin, l'oxyde de silicium, l'oxyde d'aluminium, le talc, l'hydroxyde d'aluminium, le silicagel, la diatomite.
